Europäisches Patentamt

European Patent Office

Office européen des brevets

(19)

(11) Numéro de publication: **0 081 437**
**B1**

(12) **FASCICULE DE BREVET EUROPEEN**

(45) Date de publication du fascicule du brevet: **18.03.87**

(51) Int. Cl.⁴: **H 04 B 3/23**

(21) Numéro de dépôt: **82402244.6**

(22) Date de dépôt: **08.12.82**

(54) **Systéme annuleur d'écho.**

(30) Priorité: **09.12.81 FR 8122984**

(43) Date de publication de la demande:
**15.06.83 Bulletin 83/24**

(45) Mention de la délivrance du brevet:
**18.03.87 Bulletin 87/12**

(84) Etats contractants désignés:
**BE CH DE GB IT LI NL SE**

(56) Documents cités:
**FR-A-2 337 465**
**US-A-2 795 865**

**IEEE FIFTH INTERNATIONAL CONFERENCE ON DIGITAL SATELLITE COMMUNICATIONS, 23 - 26 mars 1981, pages 259-264, Genoa (IT); M. COPPERI et al.: "A new approach for a microprogrammed echo canceller".**

(73) Titulaire: **SOCIETE ANONYME DE TELECOMMUNICATIONS**
**40 avenue de New York**
**F-75116 Paris (FR)**

(72) Inventeur: **Colin de Verdière, Jean-Marc Marie**
**18, rue Coriolis**
**F-75012 Paris (FR)**
Inventeur: **Langlois, Patrice René**
**46, Boulevard de Créteil**
**F-94100 Saint Maur (Val de Marne) (FR)**

(74) Mandataire: **Bloch, Robert et al**
**6, rue du Faubourg Saint-Honoré**
**F-75008 Paris (FR)**

Courier Press, Leamington Spa, England.

# 0 081 437

**Description**

La présente invention concerne un système annuleur d'écho, comprenant un annuleur d'écho, un dispositif d'initialisation, dont des premières sorties sont reliées à des premières entrées de l'annuleur d'écho et dont au moins une deuxième sortie est reliée à au moins une deuxième entrée de l'annuleur d'écho, un générateur de séquence pseudoaléatoire $u_k$, dont la sortie est reliée à une première entrée du dispositif d'initialisation, le dispositif d'initialisation comprenant des moyens reliés au générateur pour transformer la séquence ($u_k$) en une suite d'échantillons ($e_k$) déduits de ($u_k$) par la formule $e_k = a(2u_k - 1)$, un circuit différentiel, dont l'entrée est reliée à au moins ladite deuxième sortie du dispositif d'initialisation, et un soustracteur, dont les entrées sont reliée respectivement à la sortie du circuit différentiel et à la sortie de l'annuleur d'écho.

Plus généralement, la présente invention concerne la transmission de données bidirectionnelles simultanée sur circuit deux fils, et plus particulièrement la technique d'annulation d'écho.

Les dispositifs annuleurs d'écho fournissent une estimation des échos et la retranchent du signal reçu. De tels dispositifs permettent ainsi la transmission bidirectionnelle simultanée de données sur ligne deux fils, par exemple au moyen de modems (modulateurs—démodulateurs) émettant dans la même bande de fréquence.

Un système du type mentionné ci-dessus est déjà enseigné, notamment par le document IEEE, Fifth International Conference on digital satellite communications, 23—26 mars 1981, pages 259—264, Genoa, Italie; M. Copperi et al. "A new approach for a microprogrammed echo canceller", ainsi que par le document US—A—3 795 865.

Mais dans cet art antérieur, pour le calcul de la réponse impulsionnelle, il est prévu de former la fonction d'autocorrélation de la séquence pseudo-aléatoire.

Or cette méthode ne donne pas de très bons résultats, notamment en présence de bruit.

La présente invention vise donc à pallier cet inconvénient.

A cet effet, elle concerne un système du type mentionnée ci-dessus, caractérisé par le fait que le dispositif d'initialisation comporte un premier registre à décalage, dont l'entrée est reliée à la sortie des moyens de transformation, un second registre à décalage, dont les entrées sont reliées aux sorties du premier registre, des multiplicateurs, dont les entrées sont reliées à la sortie du soustracteur et aux sorties du second registre, respectivement, et des additionneurs, dont les entrées sont reliées aux sorties des multiplicateurs ainsi qu'à des troisièmes registres, respectivement, et dont les sorties sont reliées respectivement aux entrées de ces troisièmes registres, qui contiennent, à une constante multiplicative près les coefficients initiaux appliqués à l'annuleur d'écho.

Ainsi, la présente invention se distingue de l'art antérieur par le fait qu'elle met en oeuvre une méthode de déconvolution. Au lieu de la formation de la fonction d'auto-corrélation, elle ne prévoit qu'un simple calcul matriciel que donne effectivement de bien meilleurs résultats, notamment en présence de bruit.

La présente invention concerne également un système annuleur d'écho, comprenant un annuleur d'écho, un dispositif d'initialisation, dont des premières sorties sont reliées à des premières entrées de l'annuleur d'écho et dont au moins une deuxième sortie est reliée à au moins une deuxième entrée de l'annuleur d'écho, un générateur de séquence pseudo-aléatoire ($u_k$), dont la sortie est reliée à une première entrée du dispositif d'initialisation, un modulateur, dont les deux entrées sont reliées à deux deuxièmes sorties du dispositif d'initialisation et dont la sortie est reliée à l'entrée d'un circuit différentiel, un démodulateur dont l'entrée est reliée à la sortie d'un soustracteur dont les entrées sont reliées respectivement à la sortie du circuit différentiel et à la sortie de l'annuleur d'écho, et dont les deux sorties sont reliées à deux deuxièmes entrées du dispositif d'initialisation, le dispositif d'initialisation comprenant des moyens reliés à la sortie du générateur et l'entrée du modulateur, pour former sur deux voies, respectivement, deux suites d'échantillons ($a_k$) et ($b_k$) déduits de ($u_k$) par $a_k = 2u_k - 1$ (resp. $b_k = 2u_{k-1}$), système caractérisé par le fait que le dispositif d'initialisation comprend, pour chacune des dites deux voies, un premier registre à décalage relié aux moyens de formation, un deuxième registre à décalage, relié au premier registre, des multiplicateurs dont les entrées sont reliées aux sorties du second registre et, par l'intermédiaire d'un circuit d'addition, à la sortie du démodulateur, respectivement, et des moyens d'addition, dont les entrées sont reliées aux sorties des multiplicateurs ainsi qu'à des troisièmes registres, respectivement, et dont les sorties sont reliées respectivement aux entrées de ces troisièmes registres, qui contiennent, à une constante multiplicative près, les coefficients initiaux appliqués à l'annuleur d'écho.

D'autres avantages et caractéristiques apparaîtront à la lecture de la description suivante illustrée par des dessins.

La figure 1 est une représentation générale de l'insertion d'un dispositif d'initialisation selon l'invention pour annuleur d'écho dans le cas d'une transmission en bande de base.

La figure 2 représente de façon détaillée le dispositif d'initialisation proprement dit, de la figure 1.

La figure 3 représente un dispositif d'initialisation selon l'invention avec modulation pour annuleur d'écho en bande de base.

La figure 4 représente le dispositif d'initialisation de la figure 3, de façon détaillée.

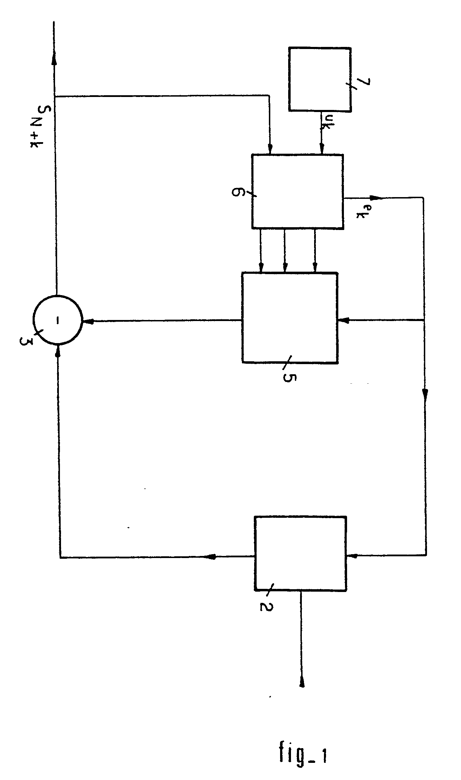

En se référant à la figure 1, un annuleur d'écho 5 connu en soi effectue une estimation de l'écho à partir du signal entrant dans le cas d'une transmission en bande de base. Ce signal entrant se présente comme une suite de données complexes.

2

L'estimation de l'écho, dans un annuleur, est soustraite du signal reçu, grâce aux moyens 3 de soustraction.

Les annuleurs d'écho 5 connus sont formés, par exemple, d'un système de réactualisation des coefficients.

Dans le cas où le traitement de l'annuleur d'écho 5 est effectué en bande de base, la réactualisation des coefficients selon l'algorithme du gradient s'écrit à l'instant $(n+1)$ T

$$C_k(n+1)=C_k(n)+\gamma e(n)a(n-k)$$

où $\gamma$ est une constante réelle positive.

Un circuit différentiel 2 assure le couplage de la ligne avec l'émission et la réception du modem.

L'algorithme du gradient ne convergeant pas très rapidement, l'initialisation du système d'annulation d'écho peut être assez longue.

L'invention consiste essentiellement à insérer un dispositif 6 dit d'initialisation recevant en entrée le signal $u_n$ de séquence d'initialisation ainsi que le signal $s_n$ de réception estimé. Il est bien connu que les modems utilisent, après leur connexion à la ligne, des séquences d'initialisation. Ces séquences sont habituellement des messages pseudo-aléatoires.

Les propriétés des séquences pseudo-aléatoires sont bien connues. L'article de Williams et Sloane publié dans Proceedings of the IEEE vol. 64 n° 12 Déc. 1976 pp. 1715 à 1727 étudie leurs particularités. Soit $\{u_k\}$ la suite des échantillons d'une séquence d'initialisation formée à l'aide d'un générateur pseudo-aléatoire 7. Le message peut être composé de $(N+1)/2$ "zéros" et de $(N-1)/2$ "uns".

Conformément à la figure 1, le générateur 7 pseudo-aléatoire fournit le message $\{u_k\}$ à l'entrée du dispositif 6 d'initialisation. En réception le message est appliqué à l'entrée du dispositif d'initialisation 6 qui fournit en sortie des coefficients directement utilisés par le dispositif 5 annuleur d'écho proprement dit comme coefficients initiaux $C_k^0$.

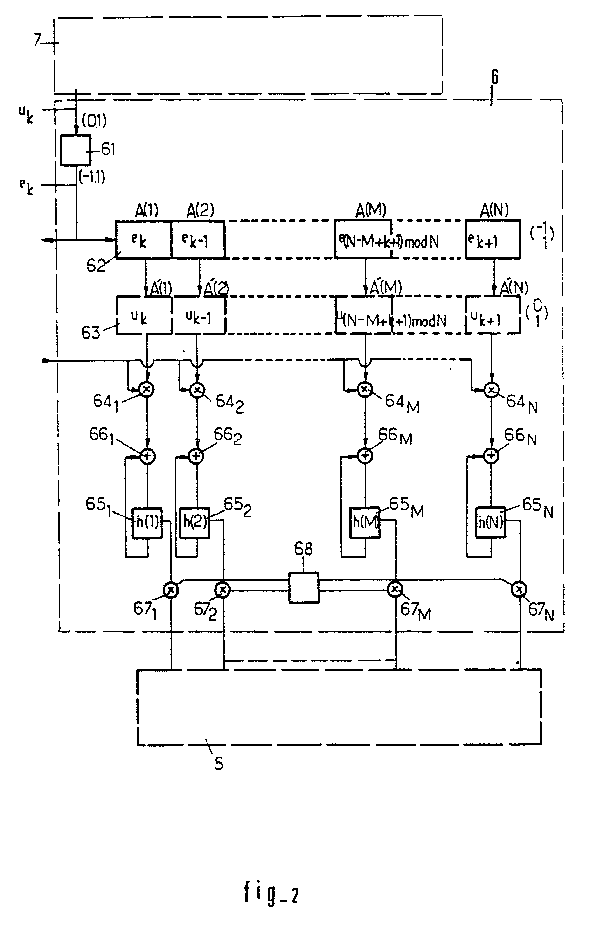

En se référant à la figure 2, le message $\{u_k\}$ est formé par un générateur 7. Les échantillons constituant la suite $\{u_k\}$ sont pseudo-aléatoires de période égale à N.

Ce message $\{u_k\}$ est appliqué à l'entrée du dispositif 6 d'initialisation proprement dit.

Le message $\{u_k\}$ est transformé selon l'invention en un message $\{e_k\}$ formé d'échantillons $(a,-a)$ au moyen d'un dispositif 61. Chaque échantillon $e_k$ se déduit de l'échantillon $u_k$ entrant par la relation $e_k=a$ (2 $u_k-1$).

On choisit avantageusement dans la pratique a égal à 1.

Le message $\{e_k\}$ est d'une part émis en ligne, d'autre part appliqué à l'entrée d'un registre à décalage 62 constitué de N cellules A (1), A (2). . . A (N) introduisant chacune un retard T. Ainsi la cellule A (1) contient $e_k$, la cellule A (2) contient $e_{k-1}$, la cellule A (M) contient $e_{(N-M+k+1)}$ modulo N et enfin le registre A (N) contient $e_{k+1}$. Ensuite des N échantillons sont appliqués en parallèle à l'entrée d'un registre 63 formé également de N cellules A' (1) . . . A' (M) . . . A' (N). Ces N cellules A' (M) forment à partir des $e_{N-M+k+1}$ des échantillons $u_{N-M+k+1}$ à leur sortie.

Ainsi la cellule A' (1) reçoit $e_k$ et fournit l'échantillon $u_k$ en sortie, la cellule A' (N) reçoit $e_{k+1}$ et fournit $u_{k+1}$ en sortie.

De façon général la cellule A' (M) reçoit l'échantillon $e_{(N-M+1+k) \bmod N}$ et fournit en sortie l'échantillon $u_{(N-M+1+k) \bmod N}$. Ces N échantillons $u_k . . . u_{(N+1+k-M)} . . . u_{k+1}$ sont appliqués à l'entrée de N circuits de multiplication $(64_i)_{(i=1...N)}$. Ainsi chaque échantillon $u_{N-M+1+k}$ est multiplié avec l'échantillon $s_{N+k}$ reçu sur la ligne de transmission à la sortie du circuit 3 de soustraction (cf. figure 1). Les N résultats $[s_{N+k} \cdot u_{N-i+1}]_{(i=1,N)}$ issus des N circuits $(64)_i$ $(i=1,N)$ sont appliqués respectivement à l'entrée de N registres $65_i$, qui ont été initialisés à zéro, par l'intermédiaire de N circuits d'addition $(66)_i$. En effet les opérations de multiplication (grâce aux N circuits $64_i$ de multiplication) et d'addition (grâce aux N circuits $66_i$ d'addition) ne commencent qu'à l'instant NT, soit à partir de l'arrivée de l'échantillon $s_N$, de façon générale, à l'arrivée des échantillons $s_{N+k}$, k variant de 0 à $N-1$.

Les N circuits d'addition $66_i$ permettent de cumuler à l'instant $(N+k)$ T considéré le contenu des N registres $63_i$.

Ainsi les N registres $65_i$ ont pour contenu respectif à l'instant $(N+k)$ T des échantillons $h_k$ (i) où:

$$h_k(i)=h_{k-1}(i)+s_{N+k} \cdot [\text{contenu de A'(i)}]$$

soit encore:

$$h_k(i)=h_{k-1}(i)+s_{N+k} \cdot u_{(N+k+1-i) \bmod N}$$

Puis à l'instant $(N+k+1)$ T le contenu du registre A (i) est $u_{(k-i+2) \bmod N}$ et l'échantillon reçu est $s_{N+k+1}$ alors le calcul suivant est effectué et appliqué dans le registre $65_i$.

$$h_{k+1}(i)=h_k(i)+s_{N+k+1} \cdot u_{(k-j+2) \bmod N}$$

et il en est de même pour les N registres $(65_i)_{(i=1,N)}$. Une mémoire 68 contenant la constante

$$\frac{2}{a(N+1)}$$

permet de multiplier chaque échantillon h (i) de chaque registre $65_i$ grâce aux N circuits de multiplication $(67_i)_{(i=1,N)}$.

Les N coefficients H $(i)_{(i=1,N)}$ issus des N circuits de multiplication $(76_i)_{(i=1,N)}$ sont les valeurs des échantillons de la réponse impulsionnelle de l'écho; ils sont appliqués à l'entrée de l'annuleur d'écho 5 et y servent de coefficients initiaux.

Si les $\{H_j\}$ sont les échantillons de la réponse impulsionnelle de l'écho le signal reçu en régime permanent est:

$$\begin{bmatrix} s_N \\ s_{N+1} \\ \vdots \\ s_{N+k} \\ \vdots \\ s_{2N-2} \\ s_{2N-1} \end{bmatrix} = \begin{bmatrix} e_N & e_{N-1}\cdots & e_{N-j+1}\cdots\cdots & e_2 & e_1 \\ e_1 & e_N\cdots & e_{N-j+2}\cdots\cdots & e_3 & e_2 \\ \vdots & \vdots & \vdots & \vdots & \vdots \\ e_k & e_{k-1}\cdots & e_{(N-j+1+k)\bmod N}\cdots & e_{k+2} & e_{k+1} \\ \vdots & \vdots & \vdots & \vdots & \vdots \\ e_{N-2} & e_{N-3}\cdots & e_{N-j-1}\cdots\cdots & e_N & e_{N-1} \\ e_{N-1} & e_{N-2}\cdots & e_{N-j}\cdots\cdots & e_1 & e_N \end{bmatrix} \begin{bmatrix} H_1 \\ H_2 \\ \vdots \\ H_j \\ \vdots \\ H_{N-1} \\ H_N \end{bmatrix}$$

Les valeurs des échantillons $H_j$ sont données par:

$$\begin{bmatrix} H_1 \\ H_2 \\ \vdots \\ H_j \\ \vdots \\ H_N \end{bmatrix} = \frac{2}{a(N+1)} \begin{bmatrix} u_N & u_1\cdots & u_k\cdots\cdots & u_{N-1} \\ u_{N-1} & u_N\cdots & u_{k-1}\cdots\cdots & u_{N-2} \\ \vdots & \vdots & \vdots & \vdots \\ u_{N-j+1} & u_{N-j+2} & u_{(N-j+1+k)\bmod N} & u_{N-j} \\ \vdots & \vdots & \vdots & \vdots \\ u_1 & u_N & u_{k+1} & u_N \end{bmatrix} \begin{bmatrix} s_N \\ s_{N+1} \\ \vdots \\ s_{N+k} \\ \vdots \\ s_{2N-1} \end{bmatrix}$$

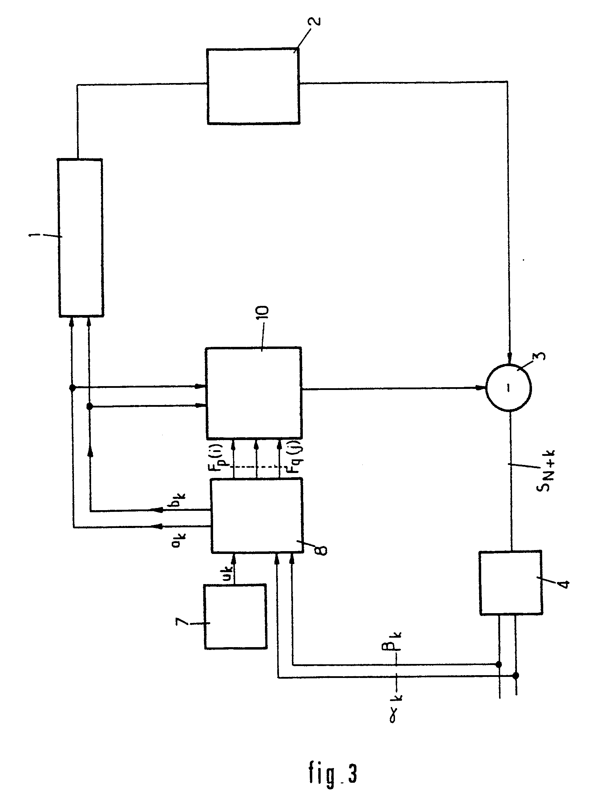

En se référant à la figure 3, le système d'initialisation d'annulation d'écho, selon l'invention, peut également s'adapter à un système modulé, l'annuleur travaillant encore en bande de base. Le dispositif annuleur d'écho 10 reçoit de la même façon que sur la figure 1 des coefficients $\{F_p(i), F_q(j)\}_{i,j=1,N}$ fournis par un dispositif 8 d'initialisation.

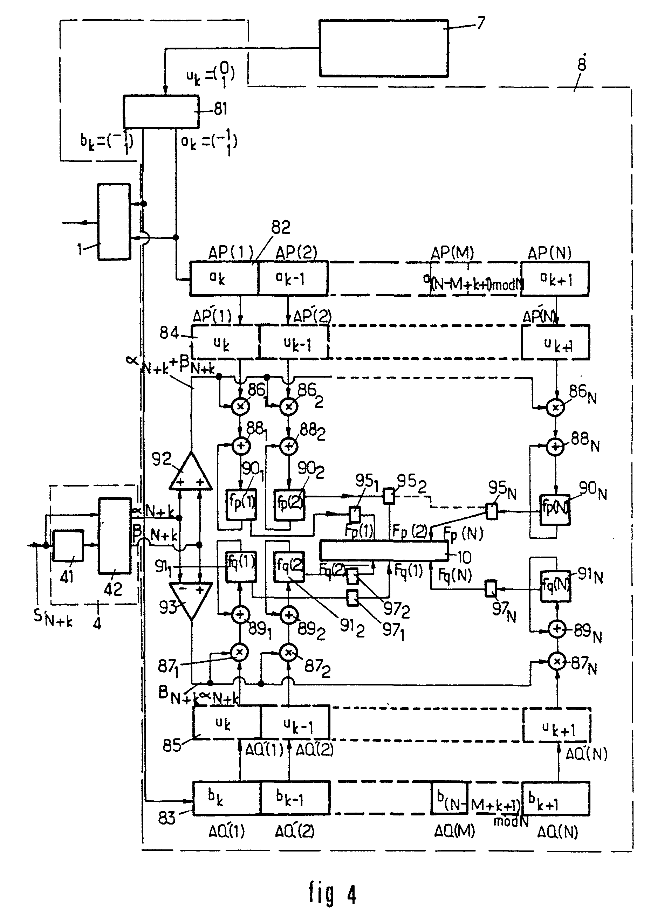

Le dispositif 8 d'initialisation reçoit quant à lui un message $\{u_k\}$ pseudo-aléatoire fourni par le générateur 7. Le dispositif 8 d'initialisation transforme, ainsi qu'il sera explicité à l'aide de la figure 4, le message $\{u_k\}$ en deux messages $\{a_k\}$ et $\{b_k\}$ qui sont chacun émis en ligne. Ces messages $\{a_k\}$ et $\{b_k\}$ sont d'une part appliqués à l'entrée de l'annuleur 10, d'autre part à l'entrée d'un modulateur 1. Le dispositif 10 annuleur d'écho effectue, de façon connue en soi, une estimation de l'écho à partir des échantillons $a_k$ et $b_k$ avant modulation par le modulateur 1. Cette estimation est modulée puis soustraite du signal reçu, avant une démodulation cohérente complexe par un démodulateur 4, grâce aux moyens 3 de soustraction. Un circuit différentiel 2 assure le couplage de la ligne avec l'émission et la réception du modem. Les échantillons $\alpha_{n+k}$ et $\beta_{N+k}$ obtenus à la sortie du démodulateur 4 sur deux voies sont appliqués à l'entrée du dispositif 8 d'initialisation.

La figure 4 explicite la structure et le fonctionnement du dispositif 8 d'initialisation selon l'invention. Un dispositif 81 de codage reçoit le message $\{u_k\}$ pseudo-aléatoire généré par le générateur 7, comme pour la réalisation de la figure 2. Toutefois le dispositif 81 code ce message $\{u_k\}$ sur deux voies de façon connue en soi. Soient $\{a_k\}$ et $\{b_k\}$ les messages ainsi formés. Chaque échantillon $a_k$ ou $b_k$ issu du système 81 de codage se déduit de l'échantillon $u_k$ entrant par la relation $a_k=(2 u_k-1)$ si bien que les $a_n$ et les $b_n$ sont formés de $\pm 1$.

Dans la pratique on choisit $a_k$ et $b_k$ égaux. Chacun des deux messages est d'une part émis en ligne après une modulation cohérente complexe au moyen du modulateur 1 et d'autre part appliqué à l'entrée de registres à décalage 82 et 83. Le message $\{a_k\}$ par exemple est appliqué à l'entrée du registre 82 formé de N cellules AP (1)... AP(M)... AP(N) décalant chacune l'échantillon entrant d'un temps T tandis que le message $b_k$ est appliqué à l'entrée du registre 83 formé également de N cellules AQ(1)... AQ(M)... AQ(N)

4

retardant chacune l'échantillon entrant d'un temps T. Les échantillons $a_k$, $a_{k-1}$... $a_{N-M+k+1}$... $a_{k+1}$ provenant respectivement des cellules AP(1) à AP(N) sont respectivement appliqués à l'entrée de N cellules AP'(1)... AP'(M)... AP'(N) d'un registre à décalage 84. De la même façon les échantillons $b_k$, $b_{k-1}$... $b_{N-M+k+1}$... $b_{k+1}$ provenant respectivement des cellules AQ(1) à AQ(N) sont respectivement appliqués à l'entrée de N cellules AQ'(1)... AQ'(M)... AQ'(N) d'un registre à décalage 85. Les registres 84 et 85 fournissent en sortie, en parallèle, les échantillons $u_k$, $u_{k-1}$... $u_{(N-M+k+1)\ mod\ N}$... $u_{k+1}$ à l'entrée de 2 N circuits de multiplication $(86_i)_{(i=1,N)}$ et $(87_j)_{(j=1,N)}$.

Ces circuits de multiplication $(86_i)_{(i=1,N)}$ et $(87_j)_{(j=1,N)}$ reçoivent également respectivement les échantillons $(\alpha_{N+k}+\beta_{N+k})$, provenant du circuit d'addition 92, et $(\beta_{N+k}-\alpha_{N+k})$ provenant du circuit 93. Le signal $\alpha_{N+k}$ et le signal $\beta_{N+k}$ sont obtenus à partir du signal $s'_{N+k}$ obtenu à la sortie du circuit 3 de soustraction par démodulation cohérente complexe. A cet effet le démodulateur 4 se compose d'un circuit de déphasage (de $\pi/2$) 41 et d'un démodulateur 42 proprement dit qui fournit les deux voies en quadrature $\alpha_{N+k}$ et $\beta_{N+k}$. Ces messages $\{\alpha_{N+k}\}$ et $\{\beta_{N+k}\}$ sont donc appliqués à l'entrée des circuits 92 et 93.

Les N circuits de multiplication $(86_i)_{(i=1,N)}$ [resp $(87_j)_{(j=1,N)}$] permettent ainsi de multiplier les signaux $\alpha_{N+k}+\beta_{N+k}$ (resp $\beta_{N+k}-\alpha_{N+k}$) provenant du circuit 92 (resp 93) avec le contenu de la $i^{ème}$ cellule (resp $j^{ème}$ cellule) du registre 84 (resp 85).

Le résultat des N multiplications des $(86_i)_{(i=1,N)}$ (resp $(87_j)_{(j=1,N)}$ est respectivement appliqué dans N registres $(90_i)_{(i=1,N)}$ (resp $(91_j)_{(j=1,N)}$ par l'intermédiaire de N circuits d'addition $(88_i)_{(i=1,N)}$ (resp $(89_j)_{(j=1,N)}$. De la même façon que pour la réalisation de la figure 2, les 2 N circuits $88_i$ et $89_j$ permettent de cumuler à l'instant (N+k)T considéré le contenu des deux registres 84 et 85.

Les 2 N registres $(90_i)_{(i=1,N)}$ et $(91_j)_{(j=1,N)}$ ont été initialisés à zéro. Les registres $(90_i)_{(i=1,N)}$ ont pour contenu respectif à l'instant (N+k)T des échantillons $f_p(i)$ tels que:

$$f_p(i)=f_p(i)+(\alpha_{N+k}+\beta_{n+k}) \cdot [\text{contenu de AP'}(i)]$$

soit encore

$$f_p(i)=f_p(i)+(\alpha_{N+k}+\beta_{N+k}) \cdot u_{(N+k+1-i)\ mod\ N}$$

où k est compris entre 0 et N−1.

De la même façon les registres $(91_j)_{(j=1,N)}$ ont pour contenu respectif à l'instant (N+k)T des échantillons $f_q(j)$ tels que:

$$f_q(j)=f_q(j)+(\beta_{N+k}-\alpha_{N+k}) \cdot u_{(N+k+1-j)\ mod\ N}$$

et où k est compris entre 0 et N−1.

Le contenu des N registres $(90_i)_{(i=1,N)}$ (resp $(91_j)_{(j=1,N)}$ est appliqué à l'entrée de N registres $(91_i)_{(i=1,N)}$ (resp $(97_j)_{(j=1,N)}$ où les N coefficients $f_p(i)_{(i=1,N)}$ (resp $f_q(j)_{(j=1,N)}$ sont multipliés par la constante

$$\frac{1}{a(N+1)}$$

En effet comme

$$\frac{1}{N+1}$$

est égal à une puissance négative de 2, il n'est pas nécessaire de disposer de circuit de multiplication. En sortie des N registres $(95_i)_{(i=1,N)}$ resp $(97_j)_{(j=1,N)}$ on obtient des coefficients $F_p(i)_{(i=1,N)}$ (resp $F_q(j)_{(j=1,N)}$ qui sont les coefficients de l'annuleur d'écho 10 aux conditions initiales. Ces N coefficients $F_p(i)$ et $F_q(j)$ sont donc appliqués à l'entrée de l'annuleur d'écho 10.

Ils sont également des échantillons de la réponse impulsionnelle de l'écho.

Les réalisations des figures 1 et 3 ont été faites dans l'hypothèse d'un annuleur d'écho en bande de base.

Le dispositif d'initialisation est tout particulièrement intéressant pour les systèmes de transmission affectés d'échos lointains, cas particulièrement fréquent pour les transmissions par satellites.

En effet, certaines liaisons et en particulier les liaisons par satellites amènent un retard très long. Après initialisation et plus particulièrement en régime permanent, les valeurs des coefficients de tout annuleur d'écho connu en soi sont théoriquement égales aux échantillons de la réponse impulsionnelle de l'écho ramené en bande de base. Aussi, si cette réponse impulsionnelle est constitué de deux séries d'échantillons non nuls séparés par une série d'échantillons nuls dont le nombre dépend du retard de l'écho lointain, il y a tout intérêt à déterminer ce retard afin de ne pas avoir à calculer, adapter et garder en mémoire des coefficients dont la valeur va osciller autour de zéro et qui introduiraient du bruit.

# 0 081 437

Soit $\{r_p\}$ la suite d'échantillons représentatifs de la réponse impulsionnelle de l'écho et supposons que, pour p compris entre 1 et g, les échantillons sont non nuls, que pour p compris entre g+1 et m, les échantillons sont nuls et que, pour p compris entre m+1 et 1, les échantillons sont non nuls. En régime permanent tout annuleur d'écho connu en soi effectuerait une annulation de signal d'écho prenant en compte tous les échantillons même ceux qui sont nuls. Ceci introduit du bruit sur l'annulation de l'écho.

La présente invention vise à utiliser la réponse impulsionnelle effectuée par le dispositif d'initialisation selon l'invention pour optimiser le traitement effectué par l'annuleur lui-même.

Supposons que les coefficients $C_k$ de l'annuleur d'écho soient réactualisés selon l'algorithme du gradient. On sait que le pas de l'algorithme est fonction du nombre d'échantillons dits coefficients à traiter et plus précisément que ce pas est une fonction inverse de ce nombre d'échantillons. Un nombre d'échantillons prenant en compte les échantillons nuls introduit du bruit et diminue les performances de l'annuleur. En effet plus le pas de l'algorithme est grand, plus la convergence est rapide.

Ainsi le dispositif d'initialisation selon l'invention permet en régime permanent de déterminer la réponse impulsionnelle de l'écho et de commander à l'annuleur de n'effectuer la réactualisation que des échantillons non nuls. On convient à cet effet de définir comme non nuls les échantillons de la réponse impulsionnelle de valeur supérieure ou égale à un seuil prédéterminé.

Toutefois dans une telle application il est nécessaire de choisir la séquence d'initialisation de façon appropriée. En effet il est nécessaire que la longueur N de la séquence pseudo-aléatoire $\{u_k\}$ choisie pour initialiser l'annuleur soit supérieure à la longueur 1 totale de la suite $\{r_p\}$ d'échantillons représentatifs de la réponse impulsionnelle de l'écho (échantillons nuls compris).

## Revendications

1. Système annuleur d'écho, comprenant un annuleur d'écho (5), un dispositif d'initialisation (6), dont des premières sorties sont reliées à des premières entrées de l'annuleur d'écho (5) et dont au moins une deuxième sortie est reliée à au moins une deuxième entrée de l'annuleur d'écho (5), un générateur de séquence pseudo-aléatoire $(u_k)$ (7), dont la sortie est reliée à une première entrée du dispositif d'initialisation (6), le dispositif d'initialisation (6) comprenant des moyens (61) reliés au générateur (7) pour transformer la séquence $(u_k)$ en une suite d'échantillons $(e_k)$ déduits de $(u_k)$ par la formule $e_k=a(2u_k-1)$, un circuit différentiel (2), dont l'entrée est reliée à au moins ladite deuxième sortie du dispositif d'initialisation (6), et un soustracteur (3), dont les entrées sont reliées respectivement à la sortie du circuit différentiel (2) et à la sortie de l'annuleur d'écho (5), système caractérisé par le fait que le dispositif d'initialisation comporte un premier registre à décalage (62), dont l'entrée est reliée à la sortie des moyens de transformation (61), un second registre à décalage (63), dont les entrées sont reliées aux sorties du premier registre (62), des multiplicateurs (64), dont les entrées sont reliées à la sortie du soustracteur (3) et aux sorties du second registre (63), respectivement, et des additionneurs (66), dont les entrées sont reliées aux sorties des multiplicateurs (64) ainsi qu'à des troisièmes registres (65), respectivement, et dont les sorties sont reliées respectivement aux entrées de ces troisièmes registres (65) qui contiennent, à une constante multiplicative près, les coefficients initiaux appliqués à l'annuleur d'écho.

2. Système annuleur d'écho, comprenant un annuleur d'écho (10), un dispositif d'initialisation (8), dont des premières sorties sont reliées à des premières entrées de l'annuleur d'écho (10) et dont au moins une deuxième sortie est reliée à au moins une deuxième entrée de l'annuleur d'écho (10), un générateur de séquence pseudo-aléatoire $(u_k)$ (7), dont la sortie est reliée à une première entrée du dispositif d'initialisation (8), un modulateur (1), dont les deux entrées sont reliées à deux deuxièmes sorties du dispositif d'initialisation (8) et dont la sortie est reliée à l'entrée d'un circuit différentiel (2), un démodulateur (4) dont l'entrée est reliée à la sortie d'un soustracteur (3) dont les entrées sont reliées respectivement à la sortie du circuit différentiel (2) et à la sortie de l'annuleur d'écho (10), et dont les deux sorties sont reliées à deux deuxièmes entrées du dispositif d'initialisation (8), le dispositif d'initialisation (8) comprenant des moyens (81) reliés à la sortie du générateur (7) et l'entrée du modulateur (1), pour former sur deux voies, respectivement, deux suites d'échantillons $(a_k)$ et $(b_k)$ déduits de $(u_k)$ par $a_k=2u_k-1$ (resp. $b_k=2u_{k-1}$), système caractérisé par le fait que le dispositif d'initialisation comprend, pour chacune des dites deux voies, un premier registre à décalage (82, 83) relié aux moyens de formation (81), un deuxième registre à décalage (84, 85), relié au premier registre (82, 83), des multiplicateurs (86, 87) dont les entrées sont reliées aux sorties du second registre (84, 85) et, par l'intermédiaire d'un circuit d'addition (92, 93), à la sortie du démodulateur (4), respectivement, et des moyens d'addition (88, 89), dont les entrées sont reliées aux sorties des multiplicateurs (86, 87) ainsi qu'à des troisièmes registres (90, 91), respectivement, et dont les sorties sont reliées respectivement aux entrées de ces troisièmes registres (90, 91), qui contiennent, à une constante multiplicative près, les coefficients initiaux appliqués à l'annuleur d'écho.

## Patentansprüche

1. Echo-Aufhebungssystem mit einem Echoaufheber (5), einer Initialisierungsschaltung (8), von der erste Ausgänge an erste Eingänge des Echoaufhebers (5) angeschlossen sind, und von der mindestens ein zweiter Ausgang an mindestens einen zweiten Eingang des Echoaufhebers (5) angeschlossen ist, einem Generator (7) für eine pseudo-aleatorische Sequenz $(u_k)$, dessen Ausgang an einen ersten Eingang der

6

Initialisierungsschaltung (8) angeschlossen ist, die eine Einrichtung (61) aufweist, welche an den Generator (7) angeschlossen ist, um die Sequenz $(u_k)$ in eine Musterfolge $(e_k)$ zu transformieren, die aus $(u_k)$ gemäß der Formel $e_k=a(2u_k-1)$ abgeleitet ist, einer Differentialschaltung (2), deren Eingang an mindestens den zweiten Ausgang der Initialisierungsschaltung (6) angeschlossen ist, und einem Subtraktionsglied (3), dessen Eingänge an den Ausgang der Differenzialschaltung (2) bzw. an den Ausgang des Echoaufhebers (5) angeschlossen sind, dadurch gekennzeichnet, daß die Initialisierungsschaltung ein erstes Schieberegister (2), dessen Eingang an die Transformationseinrichtung (61) angeschlossen ist, ein zweites Schieberegister (63), dessen Eingänge an die Ausgänge des ersten Schieberegisters (62) angeschlossen sind, Multiplikationsglieder (64), deren Eingänge an den Ausgang des Subtraktionsgliedes (3) bzw. an die Ausgänge des zweiten Schieberegisters (63) angeschlossen sind, und Addierglieder (66) aufweist, deren Eingänge an die Ausgänge der Multiplikationsglieder (64) ebenso wie an dritte Register (65) und deren Ausgänge an die Eingänge dieser dritten Register (65) angeschlossen sind, die, ausgenommen eine Multiplikationskonstante, die zur Echoaufhebung angewandten Initialkoeffizienten enthalten.

2. Echo-Aufhebungssystem mit einem Echoaufheber (10), einer Initialisierungsschaltung (8), von der erste Ausgänge an erste Eingänge des Echoaufhebers (10) angeschlossen sind und von der mindestens ein zweiter Ausgang an mindestens einen zweiten Eingang des Echoaufhebers (10) angeschlossen ist, einem Generator (7) für eine pseudo-aleatorische Sequenz $(u_k)$, dessen Ausgang an einen ersten Eingang der Initialisierungsschaltung (8) angeschlossen ist, einem Modulator (1), dessen beide Eingänge an die beiden zweiten Ausgänge der Initialisierungsschaltung (8) und dessen Ausgang an den Eingang einer Differentialschaltung (2) angeschlossen ist, einem Demodulator (4), dessen Eingang an den Ausgang eines Subtraktionsgliedes (3) angeschlossen ist, dessen Eingänge an den Ausgang der Differentialschaltung (2) bzw. an den Ausgang des Echoaufhebers (10) angeschlossen sind, wobei die beiden Ausgänge des Demodulators (4) an die beiden ersten Eingänge der Initialisierungsschaltung (8) angeschlossen ist, die eine Einrichtung (81) enthält, welche an den Ausgang des Generators (7) und an den Eingang des Modulators (1) angeschlossen ist, um auf zwei Wegen jeweils zwei Musterfolgen $(a_k)$ und $(b_k)$ zu bilden, die aus $(u_k)$ durch $a_k=2u_k-1$ (bzw. $b_k=2u_k-1$) abgeleitet sind, dadurch gekennzeichnet, daß die Initialisierungsschaltung für jeden dieser beiden Wege ein an das Formierungsglied (81) angeschlossenes erstes Schieberegister (82, 83), ein an das erste Schieberegister (82, 83) angeschlossenes zweites Schieberegister (84, 85), Multiplikationsglieder (86, 87), deren Eingänge an die Ausgänge des zweiten Schieberegisters (84, 85) und über eine Additionnsschaltung (92, 93) an den Ausgang des Demodulators (4) angeschlossen sind, und Addierglieder (88, 89) aufweist, deren Eingänge an die Ausgänge der Multiplikationsglieder (86, 87) ebenso wie an dritte Register (90, 91) und deren Ausgänge an die Eingänge dieser dritten Register (90, 91) angeschlossen sind, die, ausgenommen eine Multiplikationskonstante, die zur Echoaufhebung angewandten Initialkoeffizienten enthalten.

## Claims

1. Echo cancelling system, comprising an echo cancelling device (5), an initialization device (6), having first outputs connected to first inputs of the echo cancelling device (5) and at least a second output connected to at least a second input of the echo cancelling device (5), a generator (7) providing a pseudo random sequence $(u_k)$, the output of the generator (7) being connected to a first input of the initialization device (6), the initialization device (6) comprising means (61), connected to the generator (7), for converting the sequence $(u_k)$ into a sequence of samples $(e_k)$ derived from $(u_k)$ by the relation $e_k=a(2u_k-1)$, a differential circuit (2), the input of which is connected to at least said second output of the initialization device (6), and a subtractor (3), the inputs of which are connected respectively to the output of the differential circuit (2) and to the output of the echo cancelling device (5), system characterized in that the initialization device comprises a first shift register (62), the input of which is connected to the output of the converting means (61), a second shift register (63), the inputs of which are connected to the outputs of the first register (62), multipliers (64), the inputs of which are connected to the output of the subtractor (3) and to the outputs of the second register (63), respectively, and addition circuits (66), the inputs of which are connected to the outputs of the multipliers (64) and to third registers (65), respectively, the outputs of the addition circuits (66) being connected respectively to the inputs of these third registers (65), the contents of which provide, after multiplication by a constant, the initial coefficients applied to the echo cancelling device.

2. Echo cancelling system, comprising an echo cancelling device (10), an initialization device (8), having first outputs connected to first inputs of the echo cancelling device (10) and at least a second output connected to at least a second input of the echo cancelling device (10), a generator (7) providing a pseudo random sequence $(u_k)$, the output of the generator (7) being connected to a first input of the initialization device (8), a modulator (1), having two inputs connected to two second outputs of the initialization device (8) and an output connected to the input of a differential circuit (2), a demodulator (4) having an input connected to the output of a subtractor (3), the inputs of which are connected respectively to the output of the differential circuit (2) and to the output of the echo cancelling device (10), the two outputs of the demodulator (4) being connected to two second inputs of the initialization device (8), the initialization device (8) comprising means (81), connected to the output of the generator (7) and the input of the modulator (1), for providing on two channels, respectively, two successions of samples $(a_k)$ and $(b_k)$

7

**0 081 437**

derived from $(u_k)$ by the relation $a_k=2u_k-1$ (resp. $b_k=2u_k-1$), system characterized in that the initialization device comprise, for each of the two said channels, a first shift register (82, 83) connected to the providing means (81), a second shift register (84, 85), connected to the first register (82, 83), multipliers (86, 87), the inputs of which are connected to the outputs of the second register (84, 85) and, through an addition circuit (92, 93) to the output of the demodulator (4), respectively, and addition means (88, 89), the inputs of which are connected to the outputs of multipliers (86, 87) and to third registers (90, 91), respectively, the outputs of the addition means (88, 89) being connected respectively to the inputs of these third registers (90, 91), the contents of which provide, after multiplication by a constant, the initial coefficients applied to the echo cancelling device.

fig_1

fig_2

fig.3

fig 4